# EUROPEAN PATENT APPLICATION

(11) **EP 2 574 736 A1**
(43) Date of publication of application: **03.04.2013**
(21) Application number: 11183311.7
(22) Date of filing: 29.09.2011
(51) Int. Cl.: F01D 25/00, F02C 6/12, F01N 3/20

(54) **Turbine washing for charged internal combustion engines**

(71) Applicant: Caterpillar Motoren GmbH & Co. KG, 24159 Kiel (DE)
(72) Inventor: Krüger, Markus, 23795 Weede (DE)
(74) Representative: Kramer - Barske - Schmidtchen

(57) **Abstract**

Restricting exhaust gas treatment devices from contacting a washing medium supplied by a washing system may reduce affecting the exhaust gas treatment devices. A washing system (50) may comprise a washing device (52) configured to supply a washing medium to a turbine (*T_{H}*) during an ON mode of the washing system (50) and a fluid flow control system (38). The fluid flow control system (38) may be configured, during an OFF mode of the washing system (50), to direct exhaust gas through the at least one exhaust gas treatment device (41), and during the ON mode of the washing system (50), to restrict a mixture of exhaust gas and washing medium exiting the turbine (*T_{H}*) from being directed through the at least one exhaust gas treatment device (41).

## Description

### Technical Field

The present disclosure generally refers to a turbocharged engine system having an exhaust gas system and more particularly to an exhaust gas system having a washing system for cleaning turbines of turbochargers. The present disclosure also relates to a method for controlling such an exhaust gas system.

### Background

Internal combustion engines exhaust a complex mixture of air pollutants. These air pollutants are composed of gaseous compounds such as nitrogen oxides (*NOₓ*)*,* and solid particulate matter also known as soot. Due to increased environmental awareness, exhaust emission standards have become more stringent, and the amount of *NOₓ* and soot emitted to the atmosphere by an engine may be regulated depending on the type of engine, size of engine, and/or class of engine.

In order to ensure compliance with the environmental regulations, e.g. with the regulations of *NOₓ,* exhaust gases may be treated by exhaust gas treatment devices. One strategy called selective catalytic reduction (SCR) for treating the exhaust gas may be implemented. SCR is a process where a gaseous or liquid reductant, e.g. ammonia, urea or a urea solution, is injected into the exhaust gas stream of an engine. The reductant reacts with nitrogen oxides in the exhaust gas to form water and nitrogen. Usually, urea is introduced into the exhaust gases in an amount sufficient to provide the degree of *NOₓ* reduction desired. The desired amount of the reductant can be controlled by a urea injection system, for example.

Generally, SCR can be effective within a temperature range from about 200°C to about 500°C. By providing a catalytic surface in the form of the SCR catalyst, the SCR process can be promoted and more efficiently performed, particularly at lower temperatures. Thus, it is important to provide a suitable temperature and a suitable catalytic material with a sufficiently large surface for the SCR reaction.

SCR as used herein generally includes those processes that utilize ammonia or any *NOₓ* reducing reagent capable of generating ammonia gas upon heating. The term "urea" as used herein is further meant to comprise all those reductants that are commercially available for performing SCR.

Turbines of turbochargers, especially of heavy fuel oil (HFO) applications, may permanently be subjected to exhaust gas, which may be used for driving the turbine. The exhaust gas flowing through the turbine may contain pollutants, such as molten ash, cinder, unburned fuel, or vanadium compounds. Pollutants may deposit on the surfaces of the turbine wheel and, therefore, may disrupt proper operation of the turbine. For example, deposits may reduce the turbine's efficiency, increase the temperature of the turbine, and lead to an improper operation of the whole turbocharger, which may also comprise a compressor for pressurizing charge air for the combustion process. Generally, turbines in HFO-operations may be cleaned regularly from these deposits originating from the exhaust gas. For example, cleaning may be effected by supplying a washing medium to the turbines of turbochargers.

DT 24 28 551 B2 discloses a method and apparatus for cleaning a turbine of an exhaust gas system of an internal combustion engine. More specifically, it discloses an injector arranged to inject a cleansing agent under pressure into the turbine. By providing a permanent gas flow rate through the injectors, the injector nozzles may be prevented from being blocked.

The present disclosure is directed, at least in part, to improving or overcoming one or more aspects of prior systems.

### Summary of the Disclosure

According to an aspect of the present disclosure, a washing system for washing a turbine of an exhaust gas system, which may be provided with at least one exhaust gas treatment device disposed downstream of the turbine of an internal combustion engine, may comprise a washing device configured to supply a washing medium to the turbine during an ON mode of the washing system, and a fluid flow control system configured, during an OFF mode of the washing system, to direct exhaust gas through the at least one exhaust gas treatment device, and, during the ON mode of the washing system, to redirect a mixture of exhaust gas and washing medium exiting the turbine, so that the mixture of exhaust gas and washing medium exiting the turbine may be restricted from being directed through the at least one exhaust gas treatment device.

According to another aspect of the present disclosure, a method for controlling an exhaust gas system of an internal combustion engine, wherein the exhaust gas system may comprise a turbine and at least one exhaust gas treatment device disposed downstream of the turbine, may comprise, during an engine power mode, driving the turbine with exhaust gas, and purifying the exhaust gas downstream of the turbine with the at least one exhaust gas treatment device, and, during a turbine washing mode, supplying a washing medium to the turbine for washing the turbine, and redirecting a mixture of exhaust gas and washing medium exiting the turbine, so that the mixture of exhaust gas and washing medium exiting the turbine may be restricted from being purified.

Other features and aspects of this disclosure will be apparent from the following description and the accompanying drawings.

### Brief Description of the Drawings

Fig. 1 is a schematic top view of an internal combustion engine with a two-stage turbocharged system; and

Fig. 2 is a schematic perspective view of an internal combustion engine with a two-stage turbocharged system.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

During a washing procedure of the turbine, it may be desirable to provide an arrangement for restricting the exhaust gas treatment devices from contacting the washing medium supplied by a washing system, since the washing medium containing detached deposits and exhaust gas may block and, therefore, may damage the exhaust gas treatment devices.

The disclosure may be based in part on the discovery that redirecting a washing medium supplied to a turbine of a two-stage turbocharged system not to pass through an exhaust gas treatment device, may reduce the blocking of the exhaust gas treatment device, for example, by deposits contained in the washing medium that detached from the turbine. Furthermore, in some embodiments, this may allow proper operation of the exhaust gas treatment device and may increase the efficiency of the turbocharger.

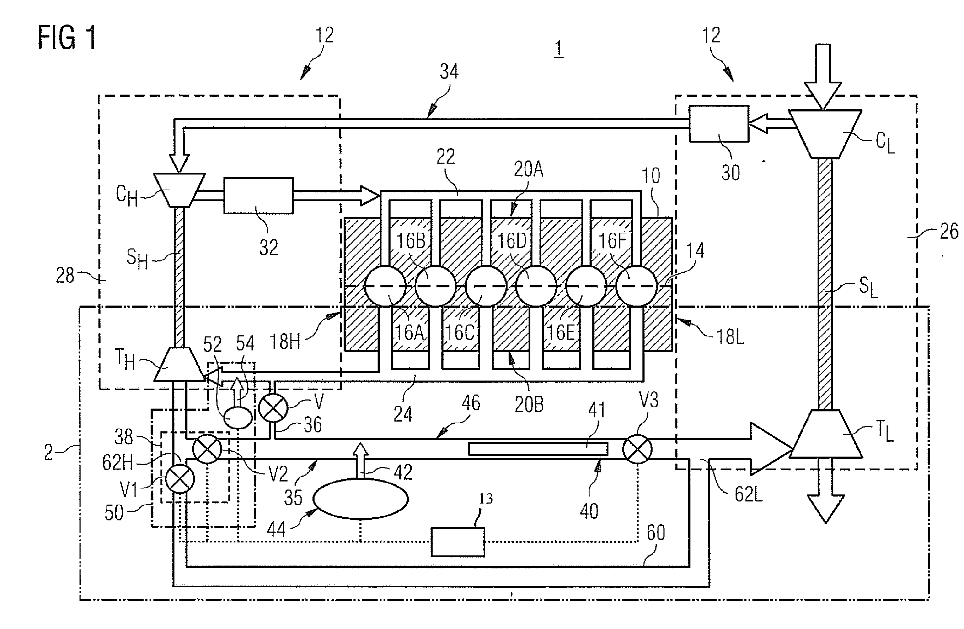

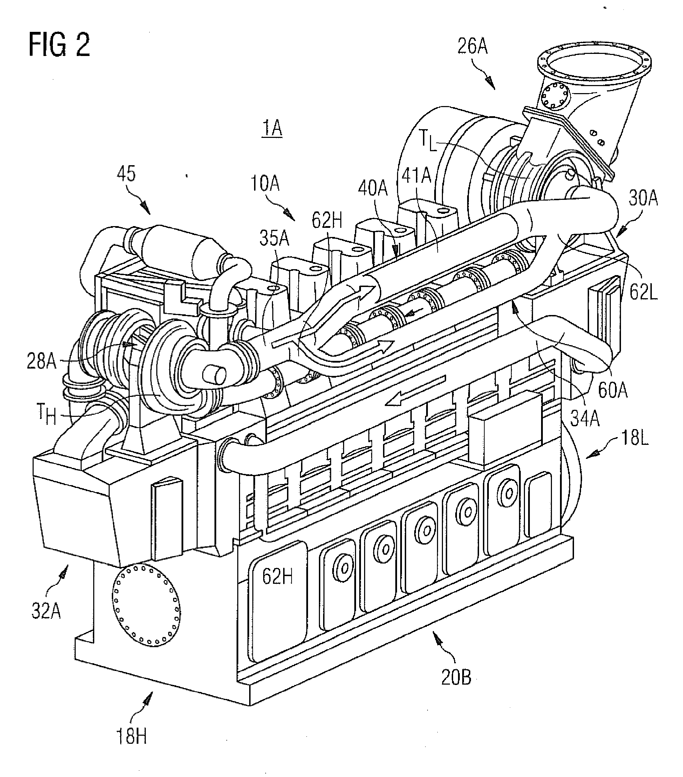

Exemplary embodiments of a two-stage turbocharged internal combustion engine with an exhaust gas system providing a washing system are described in the following with reference to Figs. 1 and 2.

An internal combustion engine 1, such as an in-line 6-cylinder engine, may comprise an engine block 10, a two-stage turbocharged system 12, a fuel tank (not shown), and an exhaust gas system 2 which may be provided with at least one exhaust gas treatment device 40, a washing system 50 and an engine control unit 13. Engine block 10 may include a crankcase within which a crankshaft 14 may be supported. Crankshaft 14 is indicated by a dashed line in Fig. 1. Crankshaft 14 may be connected to pistons (not shown), which may be movable within respective cylinders 16A to 16F during operation of the internal combustion engine 1.

Engine block 10 as illustrated may have end sides 18L and 18H, being opposite in a lengthwise direction defined by crankshaft 14. Engine block 10 may further have long sides 20A and 20B being opposite in a direction orthogonal to the lengthwise direction of crankshaft 14.

An intake manifold 22 may extend along the long side 20A of engine block 10 and may be fluidly connected to each of cylinders 16A to 16F. Each of cylinders 16A to 16F may be provided with at least one inlet valve (not shown), which may be adapted to open or close the fluid connection between intake manifold 22 and a working chamber of the respective cylinder.

At long side 20B, an exhaust manifold 24 may be provided, which may be connected to each of cylinders 16A to 16F. Each of cylinders 16A to 16F may be provided with at least one exhaust valve (not shown) configured to open and close the fluid connection between the working chambers of respective cylinders 16A to 16F and exhaust manifold 24.

Generally, when internal combustion engine 1 is operated, charge air may be introduced into cylinders 16A to 16F through intake manifold 22. After combustion, exhaust gases generated by the combustion process may be released from cylinders 16A to 16F through exhaust gas manifold 24.

Two-stage turbocharged system 12 may comprise a low-pressure stage turbocharger 26 and a high-pressure stage turbocharger 28, the turbochargers 26 and 28 forming a sequential turbocharger system.

Generally, turbochargers 26, 28 may be applied to use the heat and pressure of the exhaust gas of an engine 1 to drive compressors C_{L} , *CH* for compressing the charge air for engine 1. Specifically, exhaust gas passing turbines *T_{L} , T_{H}* of turbochargers 26, 28 may rotate turbines *T_{L}, T_{H} ,* thereby decreasing in pressure and temperature. Compressors *C_{L}, CH* of the turbochargers 26, 28 are rotatably connected via common shafts *S_{L}, S_{H}* with turbines *T_{L} , T_{H}* and may be driven by turbines *T_{L} , T_{H} .*

At end side 18L (also referred to as low-pressure side), low-pressure stage turbocharger 26 may be fixedly attached to engine block 10, for example, directly or as a unit in combination with other components such as coolant blocks etc. Low-pressure stage turbocharger 26 may comprise a compressor *C_{L}* and a turbine *T_{L}* that are mechanically connected via a common shaft *S_{L}.*

At side 18H (also referred to as high-pressure side), high-pressure stage turbocharger 28 may be fixedly attached to engine block 10, for example, directly or as a unit in combination with other components such as coolant blocks etc. High-pressure stage turbocharger 28 may comprise compressor C_{H} and turbine T_{H} that are connected via common shaft *S_{H}.*

An inlet of compressor C_{L} may be configured to suck in charge air for the combustion process. Generally, an outlet of compressor C_{L} may be fluidly connected via compressor connection 34 with an inlet of compressor *C_{H} .* For example, the outlet of compressor C_{L} may be connected via a first cooler 30 to an inlet of compressor C_{H} . Then, an outlet of compressor CH may be connected via a second cooler 32 with intake manifold 22 being configured to distribute the charge air to cylinders 16A to 16F.

Low-pressure stage turbocharger 26 and first cooler 30 may form a first unit that as such may be mounted to end side 18L of engine block 10. High-pressure stage turbocharger 28 and second cooler 32 may form a second unit that as such may be mounted to end side 18H of engine block 10.

Usually, access to engine components, such as cylinders 16A to 16F and manifolds 22, 24, may be provided from long sides 20A, 20B while the side faces of engine block 10 at end sides 18L and 18H may be configured and shaped for mounting large components of two-stage turbocharged system 12, such as turbochargers 26, 28 or cooler/turbocharger units.

Thus, the charge air provided for the combustion process may be compressed prior to introduction into the engine cylinders using two-stage turbocharged system 12.

During operation of internal combustion engine 1, the charge air is accordingly twice compressed and cooled before charging of the cylinders 16A to 16F. Within cylinders 16A to 16F, further compression and, therefore, heating of the charge air may be caused through the movement of the pistons. Then, an appropriate amount of fuel, e.g. diesel oil, marine diesel oil, heavy fuel oil or a mixture thereof may be injected into cylinders 16A to 16F. Therein, the fuel may be combusted with the compressed charged air and produce exhaust gases, which may be discharged via exhaust manifold 24.

For medium speed large internal combustion engines, compressor C_{L} may compress the charge air to 4-5 bar at 180°C. Cooler 30 may cool the charge air from about 180°C to 45°C. Compressor CH may compress the charge air to 7-8 bar at 180°C and cooler 32 may cool the charge air from about 180°C to 45°C. After combustion, the exhaust gas may have a pressure of about 5 to 6 bar at a temperature in the range of about 450°C to 500°C. Within a turbine connection 35, the pressure drops to 3-4 bar and a temperature in the range of about 350°C to 400°C. After turbine *T_{L}* the temperature at ambient pressure may be in the range of or below 250°C.

An outlet of exhaust manifold 24 may be fluidly connected to an inlet of turbine T_{H} . An outlet of turbine T_{H} may be fluidly connected with an inlet of turbine T_{L} via a turbine connection 35 and an outlet of turbine T_{L} may release the exhaust gas, for example, into a secondary exhaust filtering system or directly into the environment.

Turbine *T_{H}* of high-pressure turbocharger 28 may be disposed downstream of exhaust manifold 24. An outlet of turbine *T_{H}* may be fluidly connected with an inlet of turbine *T_{L}* , which may be disposed downstream of turbine *T_{H}* . Furthermore, turbine *T_{H}* and turbine *T_{L}* may be fluidly connected via turbine connection 35. Turbine *T_{L}* having an outlet may release the exhaust gas, for example, into a secondary exhaust filtering system or directly into the environment.

The above described cycle may be repeated continuously as long as internal combustion engine 1 continues to run.

During operation of internal combustion engine 1, compressors C_{L} and *C_{H}* may be driven by turbines *T_{L}* and *T_{H}* in a controlled manner as the amount of exhaust gas provided to turbine *T_{H}* may be controlled, for example, via a valve V provided in a valve connection 36 fluidly connecting exhaust manifold 24 and turbine connection 35. In this case, exhaust system 2 may also be in an operation mode.

Turbine connection 35 extends along long side 20B. Thus, in the case of a medium speed large internal combustion engine turbine connection 35 may have a length of several meters, e.g. 5 m. Turbine connection 35 may be a tubular conduit having an inner diameter of several tenths of meters, for example. Generally, turbine connections may have an inner diameter of about 0.5 to 1 times the inner diameter of a piston of the turbocharged internal combustion engine. For internal combustion engines having piston diameters of e.g. 0.2 to 0.6 m, an inner diameter of turbine connections may be in the range of about 0.1 m to 0.6 m, and possibly about 0.3, 0.4 m, or 0.5 m or larger, for example. For medium speed internal combustion engines, inner diameters of turbine connections may be in the range of about 0.3 m to 0.5 m.

Turbine connection 35 may include an exhaust gas treatment section 40, specifically a catalyst section, comprising an exhaust gas treatment device 41, such as a selective catalytic reduction (SCR) catalyst or an oxidation catalyst. Upstream of exhaust gas treatment section 40, an injection inlet 42 for injecting a chemical reagent (e.g. urea as a reductant for SCR) into turbine connection 35 may be provided. Injection inlet 42 may be part of an (e.g. urea) injection system 44. Between injection inlet 42 and exhaust gas treatment section 40, turbine connection 35 may include a reagent homogenization section 46. Reagent homogenization section 46 may have a length sufficiently long to provide a homogeneous distribution of the reagent in the exhaust gas before reaching catalyst 41. The length of homogenization section 46 can be, for example, about four times or more the inner diameter of homogenization section 46. For instance, the inner diameter of homogenization section 46 may be about 0.3 m and therefore the length of homogenization section may be 1.2 m or more. In some embodiments, the length of homogenization section 46 may be about two or more times the inner diameter of the homogenization section. In some configurations, additional homogenization may be achieved by structural design or additional components (e.g. turbine) such that a shorter length of homogenization section 46 can be applied.

By providing exhaust gas treatment device 41 (e.g. a SCR catalyst) between the stages of the two-stage turbocharged system, components of the exhaust gas, e.g. *NOₓ,* may perform the catalytic reaction (e.g. SCR) at pressures in a range from 2 to 5 bar. For example, for medium speed engines may operate within a pressure range of about 3 to 4 bar and in a temperature range of about 300° C to 450°C, and possibly within a temperature range of about 350°C to 400°C. As the required catalytic surface may be proportional to the volume of the catalyst, the dimensions of the catalyst may be smaller at increased pressure than for a catalyst provided at ambient pressure, e.g. after turbine *T_{L}* (i.e. at about 1 bar and 250°C).

Exhaust gas system 2 may be provided with a washing system 50 comprising a washing device 52 and a fluid flow control system 38. Exhaust gas system 2 may operate in two modes.

In an OFF mode of washing system 50, exhaust gas may be treated by the at least one exhaust gas treatment device 41. The OFF mode may accompany the usual operation of internal combustion engine 1 to provide power (herein referred to as engine power mode of internal combustion engine 1).

In an ON mode of washing system 50, washing device 52 may be configured to supply a washing medium to turbine *T_{H}* for washing turbine *T_{H}* (also referred to as turbine washing mode). During the ON mode of washing system 50, internal combustion engine may be operated in a low load operation; for this instance it may be idling somewhere in the region of 500 to 1000 rpm. Then, using fluid flow control system 38, a mixture of exhaust gas and washing medium exiting turbine *T_{H}* may be redirected to avoid passing through exhaust gas treatment section 40. In some embodiments, said mixture may be redirected, for example, directly into the environment or recombined with exhaust system 2 downstream of exhaust gas treatment device 41, as described below.

As shown in Fig. 1, washing device 52 may include a washing device inlet 54 disposed upstream of turbine *T_{H}* . Washing device inlet 54 may be configured to supply the washing medium to exhaust manifold 24 of exhaust gas system 2. Washing device inlet 54 may release the washing medium into exhaust manifold 24 between valve connection 36 and turbine *T_{H}* .

The washing medium may further be provided with additives to improve the washing process of the turbines. In some embodiments, the washing medium may be substantially water.

In another embodiment, washing device 52 and washing device inlet 54 may be connected to an injection system 44 positioned upstream of turbine *T_{H} .* In this embodiment, injection system 44 may be configured to supply a washing medium to turbine *T_{H}* via washing device inlet 54 and/or inject a reductant into turbine connection 35 via injection inlet 42, depending on washing system 50 being in the ON mode or OFF mode, respectively.

In yet another embodiment, washing device inlet 54 may be disposed at turbine *T_{H}* to supply the washing medium directly to turbine *T_{H}* .

For example, during the engine power mode, exhaust gas pollutants may deposit on the surfaces of the turbine wheel of turbine *T_{H}* . Subsequently, during the ON mode of washing system 50, the supplied washing medium may be used for washing turbine *T_{H}* , thereby detaching the deposits from the turbine wheel. Therefore, after washing turbine *T_{H},* a mixture of exhaust gas and washing medium may contain detached deposits from turbine T_{H} and may be released into turbine connection 35.

Since the mixture of exhaust gas, washing medium, and detached deposits from turbine *T_{H}* may be harmful for exhaust gas treatment device 41, the mixture of exhaust gas, washing medium, and detached deposits from turbine *T_{H}* may be redirected, so that the mixture of exhaust gas, washing medium, and detached deposits from turbine *T_{H}* may be restricted from passing through exhaust gas treatment device 41. This may be implemented by providing a bypass 60 having a bypass inlet 62H and a bypass outlet 62L for redirecting the mixture of exhaust gas, washing medium, and detached deposits from turbine T_{H} around exhaust gas treatment device 41. Bypass 60 may be fluidly connected to turbine connection 35 via bypass inlet 62H, which may be located between turbine T_{H} and e.g. exhaust gas treatment device 41. After bypassing exhaust gas treatment section 40, bypass 60 may be fluidly connected to turbine connection 35 via bypass outlet 62L, which may be located between exhaust gas treatment device 41 and turbine *T_{L}* .

In addition or alternatively, the mixture of exhaust gas, washing medium, and detached deposits from turbine *T_{H}* may be disposed at least partly directly into the environment.

Fluid flow control system 38 may be configured for controlling a fluid stream passing through exhaust gas system 2. During the engine power mode, fluid flow control system 38 may direct the exhaust gas through exhaust gas treatment section 40, and, during the ON mode of washing system 50, fluid flow control system 38 may redirect the mixture of exhaust gas, washing medium, and detached deposits from turbine *T_{H}*, so that the mixture of exhaust gas, washing medium, and detached deposits from turbine T_{H} may be restricted from passing through exhaust gas treatment section 40.

As shown in Fig. 1, fluid flow control system 38 may comprise a first valve device V1 disposed at bypass 60, a second valve device V2 disposed at turbine connection 35 between bypass inlet 62H and injection inlet 42, and, optionally, a third valve device V3 disposed at turbine connection 35 between exhaust gas treatment section 40 and bypass outlet 62L. In some embodiments, second valve device V2 may also be disposed between injection inlet 42 and exhaust gas treatment section 40.

First valve device V1 may be configured to control the amount of the mixture of exhaust gas, washing medium, and detached deposits exiting turbine T_{H} flowing through bypass 60, whereas second valve device V2 may be configured to control the amount of exhaust gas flowing through exhaust gas treatment section 40. Third valve device V3 may protect exhaust gas treatment device 41 from the mixture of exhaust gas, washing medium and detached deposits when re-entering reagent turbine connection 35. As shown in Fig. 1, first valve device V1, second valve device V2, and/or third valve device V3 may be ON/OFF valves.

In some embodiments, second valve device V2 or third valve device V3 may be omitted. In this case, when the remaining valve device may be closed during the ON mode of washing system 50, a pressure originating from the exhaust gas within exhaust gas treatment section 40 may restrict the mixture of exhaust gas, washing medium, and detached deposits from turbine T_{H} from flowing into exhaust gas treatment section 40.

Fluid flow control system 38 may also be constituted by any kind of fluid flow control system, such as throttles. In some embodiments, fluid flow control system 38 may be constituted by deflectors disposed at the intersection of turbine connection 35 and bypass 60. In such embodiments, the deflectors are configured to direct the fluid stream into exhaust gas treatment section 40 or into bypass 60, depending on washing system 50 being in ON or OFF mode.

Furthermore, fluid flow control system 38 may be electronically controlled by an engine control unit 13, for example. In some embodiments, a computer program comprising computer program code means may be configured to perform the washing procedure. However, fluid flow control system 38 may also be controlled mechanically, e.g. manually.

For further illustration, Fig. 2 shows an engine 1A that comprises a low-pressure turbocharger 26A and a high-pressure turbocharger 28A that each form structural units together with coolers 30A and 32A, respectively. The units may be fixedly connected to an engine block 10A at end sides 18L and 18H.

Along long side 20B, an exhaust manifold 24 (shown in Fig. 1) may be fluidly connected to each of the cylinders (shown between turbochargers 26A and 28A) and an inlet manifold (not shown in Fig. 2) may similarly be fluidly connected to the cylinders.

A compressor connection section 34A may extend between end sides 18L and 18H of engine block 10A along long side 20B of engine block 10A. Specifically, compressor connection section 34A may extend from the outlet of first cooler 30A to the inlet of compressor CH of high-pressure turbocharger 28A. Compressor connection section 34A may be a tubular conduit used, for example, to add an additive (e.g. water) to the pre-compressed charge air.

A turbine connection 35A may extend between end sides 18L and 18H of engine block 10A along long side 20B of engine block 10A. Specifically, turbine connection 35A may extend from the outlet of turbine *T_{H}* of high-pressure turbocharger 28A to the inlet of turbine *T_{L}* of low-pressure turbocharger 26A. Turbine connection 35A may comprise a linear tubular segment that may be used as an exhaust gas treatment section 40A with at least one exhaust gas treatment device 41A, e.g. a SCR catalyst, an oxidation catalyst, or the like, schematically indicated in Fig. 2.

A bypass 60A may extend between end sides 18L and 18H of engine block 10A along long side 20B of engine block 10A. Specifically, bypass 60A may extend between turbines *T_{H}* and *T_{L}* of high-pressure turbochargers 28A and 26A, e.g. in parallel to turbine connection 35A. Bypass 60A may be a tubular conduit and may be used, for example, for redirecting the mixture of exhaust gas, washing medium, and detached deposits from turbine T_{H} around exhaust gas treatment section 40A.

The reagent injection (not explicitly shown in Fig. 2) may be positioned upstream (the arrows in Fig. 2 indicate the direction of the fluid stream during operation) of catalyst section 40A of turbine connection 35A.

Washing device 52 (not explicitly shown in Fig. 2) may be positioned upstream of or directly at high-pressure turbocharger 28A and may be configured to supply a washing medium to turbine T_{H} via washing device inlet 54 (not explicitly shown in Fig. 2).

In Fig. 2, exhaust gas treatment device 41A may be at least one SCR catalyst or at least one oxidation catalyst. In some embodiments, an SCR catalyst and an oxidation catalyst may be provided.

In Fig. 2, an exhaust gas recycling (EGR) system 45 is shown. EGR may be used to reduce the NOₓ generated during the combustion and may in some cases be used together or alternatively to SCR during operation. For example, during the start up of an engine, EGR may be used and, for a warmed up engine, SCR may be used.

In some embodiments, EGR system 45 shown in Fig. 2 may not be provided.

In yet another embodiment, internal combustion engine 1 may be provided with a single-stage turbocharger system. In this embodiment, the charge air provided for the combustion process may be pressurized once prior to introduction into the engine cylinders using the single-stage turbocharged system.

In some embodiments, the intake manifold and exhaust manifold 24B may be integrally cast with, for example, the crank case of engine block 10A.

In some embodiments, the above disclosed two-stage turbocharged systems may be applied to a V-engine including, for example, two cylinder banks, each corresponding to the single cylinder banks of Figs. 1 and 2, one of which being mirrored with respect to a vertical central plane of the engine block including its crankshaft. In those embodiments, an intake manifold may be located, for example, between the cylinder banks and each of the cylinder banks may be provided with a separate exhaust manifold.

### Industrial Applicability

In the following, the operation of an exhaust gas system 2, such as that shown in Fig. 1 is illustrated.

There are two modes in which exhaust gas system 2 may be operated: an OFF mode of washing system 50 and an ON mode of washing system 50.

During the OFF mode of washing system 50, internal combustion engine 1 may be operated to generate mechanical power (engine power mode), for example, driving a vehicle or an electrical generator. Thereby, exhaust gas may be produced by combusting fuel. After combustion, the exhaust gas may be released into exhaust manifold 24. Each of cylinders 16A to 16F may be provided with at least one exhaust valve (not shown) configured to open and close the fluid connection between the working chambers of respective cylinders 16A to 16F and exhaust manifold 24.

Subsequently, the exhaust gas may be used for driving turbine *T_{H}* of high-pressure turbocharger 28. After flowing through high-pressure turbocharger 28, the exhaust gas may be released into turbine connection 35. Fluid flow control system 38 may direct the exhaust gas through exhaust gas treatment section 40, in which the exhaust gas may be treated by exhaust gas treatment device 41, e.g. a SCR catalyst, an oxidation catalyst, or the like.

Referring to the embodiment of Fig. 1, the exhaust gas may be directed into exhaust gas treatment section 40 by closing first valve device V1 and, at the same time, opening second and third valve devices V2 and V3. Furthermore, the engine control unit 13 may also control injection system 44 to inject a reductant into the exhaust gas via injection inlet 42.

After flowing through turbine connection 35, the exhaust gas may also be used for driving turbine *T_{L}* of turbocharger 26. Then, the exhaust gas may be released to, e.g. secondary exhaust filtering systems or directly into the environment.

During the engine power mode, the exhaust gas may contaminate and pollute turbines *T_{H}* and *T_{L}.* The pollutants may lead to improper operation of two-stage turbocharged system 12, by, for example decreasing the efficiency of turbochargers 28 and 26, and possibly increasing the temperatures of turbines T_{H} and *T_{L}.*

Therefore, for example, after a predetermined operation time of internal combustion engine 1, the control unit 13 may switch washing system 50 into the ON mode, thereby initiating the washing procedure of turbine T_{H}. During the ON mode of washing system 50, internal combustion engine 1 may operate in a low load operation. During the low load operation, internal combustion engine 1 may be idling; for this instance it may be idling somewhere in the region of 500 to 1000 rpm. Washing device 52 of washing system 50 may supply a washing medium to turbine T_{H} via washing device inlet 54, the washing medium at least partially vaporizing in the hot exhaust gas.

After having washed turbine *T_{H},* a mixture of exhaust gas, washing medium, and detached deposits exiting turbine T_{H} may be released into turbine connection 35. At this time, fluid flow control system 38 may redirect the mixture of exhaust gas, washing medium, and detached deposits, so that said mixture may be restricted from passing through exhaust gas treatment section 40.

Referring to the embodiment of Fig. 1, the redirection of said mixture may be achieved by opening first valve device V1 and, at the same time, closing second and third valve devices V2 and V3. Then, the mixture of exhaust gas, washing medium and detached deposits may flow through bypass 60 in parallel to exhaust gas treatment section 40 and enter again into turbine connection 35 downstream of exhaust gas treatment section 40 via bypass outlet 62L.

Thereupon, also turbine T_{L} may be washed and, therefore, may be cleaned from deposits. Then, the mixture of exhaust gas, washing medium, and detached deposits may be released into the environment.

In some embodiments, the mixture of exhaust gas, washing medium, and detached deposits may be drained out of the exhaust gas system after washing turbine *T_{L} .* In yet another embodiment, the mixture of exhaust gas, washing medium, and detached deposits from turbine T_{H} may be directly drained out of turbine *TH .*

In addition or alternatively to a time-based initiation of the ON mode of washing system 50, in some embodiments, the need for a washing procedure may also be detected by sensing the degree of pollution of the turbine wheels. This may be achieved by measuring, e.g. a centrifugal force of the turbine wheel. If the centrifugal force exceeds a predetermined threshold, the washing procedure may be initiated. However, also several other performance parameters of internal combustion engine 1 may be indicative for initiating the washing procedure of turbine *T_{H}*, such as the efficiency of turbocharger 28.

As described above, first, second and third valve devices V1, V2 and V3 may be electronically controlled. However, first, second and third valve devices V1, V2 and V3 may also be controlled mechanically, e.g. manually.

It should be noted, that the present description refers to a preferred embodiment of this invention. However, modifications may be possible.

For example, internal combustion engine 1 may merely have a single-stage turbocharged system. In this embodiment, low-pressure turbocharger 26 may be omitted, thereby rendering a washing procedure of turbine T_{L} unnecessary. In such embodiments, bypass outlet 62L may be fluidly connected to exhaust gas system 2 as described above downstream of the at least one exhaust gas treatment device 41. In some embodiments, the mixture of exhaust gas, washing medium, and detached deposits from turbine T_{H} may be drained out without redirecting it back into exhaust gas system 2.

In some embodiments, exhaust gas treatment device 41, e.g. an SCR unit, may be constituted by more than one exhausts gas treatment device 41 being arranged in a known manner, e.g. in a parallel or serial manner.

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Examples of internal combustion engines for the herein disclosed configuration of a two-stage turbocharged system include medium speed internal combustion diesel engines, like inline and V-type engines of the series M20, M25, M32, M43 manufactured by Caterpillar Motoren GmbH & Co. KG, Kiel, Germany.

Medium speed internal combustion engines may be large standalone engines that therefore provide reasonable access to the end sides of the engine block.

The disclosed exhaust gas system may be particularly useful in a variety of machines, and motor vehicles, for cleaning turbines of turbochargers and for restricting exhaust gas treatment devices, e.g. SCR catalysts, from being blocked and/or damaged by supplied washing mediums during the ON mode of the washing system.

Although the preferred embodiments of this invention have been described herein, improvements and modifications may be incorporated without departing from the scope of the following claims.

## Claims

1. A washing system (50) for washing a turbine (*T_{H}*) of an exhaust gas system (2) provided with at least one exhaust gas treatment device (41) disposed downstream of the turbine *(T_{H})* of an internal combustion engine (1), the washing system (50) comprising:
a washing device (52) configured to supply a washing medium to the turbine (*T_{H}*) during an ON mode of the washing system (50); and
a fluid flow control system (38) configured, during an OFF mode of the washing system (50), to direct exhaust gas through the at least one exhaust gas treatment device (41), and, during the ON mode of the washing system (50), to redirect a mixture of exhaust gas and washing medium exiting the turbine *(T_{H}* ), so that the mixture of exhaust gas and washing medium exiting the turbine *(T_{H})* is restricted from being directed through the at least one exhaust gas treatment device (41).

2. The washing system (50) of claim 1, further comprising a control unit (13) configured to switch the fluid flow control system (38) into the ON mode when the washing medium is supplied by the washing device (52).

3. The washing system (50) of claim 1 or 2 , further comprising a bypass (60) for bypassing the at least one exhaust gas treatment device (41) including a bypass inlet (62H) fluidly communicating with the exhaust gas system (2) upstream of the at least one exhaust gas treatment device (41), and a bypass outlet (62L) fluidly communicating with the exhaust gas system (2) downstream of the at least one exhaust gas treatment device (41),
wherein the fluid flow control system (38) is further configured to direct the mixture of exhaust gas and washing medium exiting the turbine (*T_{H}*) through the bypass (60) during the ON mode of the washing system (50).

4. The washing system (50) of any preceding claim, wherein the fluid flow control system (38) is configured to direct the mixture of exhaust gas and washing medium exiting the turbine (*T_{H}*) into the environment.

5. The washing system (50) of any preceding claim, wherein the fluid flow control system (38) comprises:
a first valve device (V1) disposed at the bypass (60);
a second valve device (V2) disposed at the exhaust gas system (2) upstream of the at least one exhaust gas treatment device (41); and
a third valve device (V3) disposed at the exhaust gas system (2) downstream of the at least one exhaust gas treatment device (41);
wherein the fluid flow control system (38) is configured, during the OFF mode of the washing system (50), to close the first valve device (V1) and open the second valve device (V2) and the third valve device (V3), so that the exhaust gas is directed through the at least one exhaust gas treatment device (41), and, during the ON mode of the washing system (50), to open the first valve device (V1) and close the second valve device (V2) and the third valve device (V3), so that the mixture of exhaust gas and washing medium exiting the turbine *(T_{H})* is directed through the bypass (60).

6. The washing system (50) of claim 5, wherein the first valve device (V1), the second valve device (V2), and the third valve device (V3) are ON/OFF valves.

7. The washing system (50) of any one of claims 3 to 6, further comprising a further turbine (*T_{L}*) disposed downstream of the bypass outlet (62H),
wherein the fluid flow control system (38) is further configured, during the OFF mode of the washing system (50), to direct exhaust gas to the further turbine (*T_{L}*), and during the ON mode of the washing system (50), to direct the mixture of exhaust gas and washing medium exiting the turbine (*T_{H}*) passing through the bypass (60) to the further turbine (*T_{L}*).

8. The washing system (50) of any preceding claim, wherein the at least one exhaust gas treatment device (41) is an SCR unit.

9. The washing system (50) of any preceding claim, wherein the internal combustion engine (1) is at least in a low load operation during the ON mode of the washing system (50).

10. A method for controlling an exhaust gas system (2) of an internal combustion engine (1), wherein the exhaust gas system (2) comprises a turbine (*T_{H}*) and at least one exhaust gas treatment device (41) disposed downstream of the turbine (T_{H}), the method comprising the steps of:
during an engine power mode, driving the turbine (*T_{H}*) with exhaust gas, and purifying the exhaust gas downstream of the turbine (*T_{H}*) with the at least one exhaust gas treatment device (41); and
during a turbine washing mode, supplying a washing medium to the turbine (*T_{H}*) for washing the turbine (*T_{H}*), and redirecting a mixture of exhaust gas and washing medium exiting the turbine (*T_{H}*), so that the mixture of exhaust gas and washing medium exiting the turbine (T_{H}) is restricted from being purified.

11. The method of claim 10, further comprising:
redirecting the mixture of exhaust gas and washing medium exiting the turbine (*T_{H}*) back into the exhaust system (2) after redirecting the mixture of exhaust gas and washing medium exiting the turbine (T_{H}).

12. The method of claim 10 or 11, further comprising:
during the engine power mode, driving a further turbine (*T_{L}*) with the exhaust gas after purification of the exhaust gas, and
during the turbine washing mode, supplying the redirected mixture of exhaust gas and washing medium exiting the turbine (*T_{H}*) to the further turbine (*T_{L}*).

13. The method of claim 10, further comprising draining the mixture of exhaust gas and washing medium exiting the turbine *(T_{H})* out of the exhaust gas system (2) after passing through the turbine (*T_{H}*).

14. The method of any one of claims 10 to 13, wherein the internal combustion engine (1) is operated in a low load operation during the turbine washing mode.

15. A computer program comprising:
computer program code means configured to perform the steps of any of claims 10 to 14 when said program runs on a computer.
